# EUROPÄISCHE PATENTSCHRIFT

(11) **EP 3 364 530 B1**
(45) Veröffentlichungstag und Bekanntmachung des Hinweises auf die Patenterteilung: **17.11.2021**
(21) Anmeldenummer: 18155053.4
(22) Anmeldetag: 05.02.2018
(51) Int. Cl.: H02K 16/00, H02K 16/02, H02K 1/20

(54) **SYSTEM AUS MINDESTENS ZWEI ELEKTROMASCHINEN**
SYSTEM CONSISTING OF AT LEAST TWO ELECTRIC MACHINES
SYSTÈME D'AU MOINS DEUX MACHINES ÉLECTRIQUES

(30) Priorität: 21.02.2017 DE 102017202721
(43) Veröffentlichungstag der Anmeldung: 22.08.2018
(73) Patentinhaber: AUDI AG, 85045 Ingolstadt (DE)
(72) Erfinder: Albl, Sebastian, 85080 Gaimersheim (DE); Schmitz, Jürgen, 86668 Karlshuld (DE); Scharlach, Albert, 85129 Oberdolling (DE)

(56) Entgegenhaltungen:
- DE-A1- 2 849 869
- DE-A1- 3 234 673
- GB-A- 289 294
- JP-A- S59 213 271
- US-A- 4 252 506
- US-A1- 2003 011 260

## Beschreibung

Die Erfindung betrifft ein System aus mindestens zwei Elektromaschinen und ein Verfahren zum Herstellen eines Systems aus mindestens zwei Elektromaschinen.

Eine Elektromaschine umfasst einen ortsfesten Stator und einen relativ dazu drehbaren Rotor. Weiterhin kann diese Elektromaschine entweder als Motor betrieben werden, wobei elektrische Energie in mechanische Energie umgewandelt wird. Es ist ebenfalls möglich, die Elektromaschine als Generator zu betreiben, wobei mechanische Energie in elektrische Energie gewandelt wird. Falls eine Einrichtung, bspw. ein Fahrzeug, mehrere Elektromaschinen benötigt, sind diese in der Einrichtung platzsparend bzw. bauraumsparend anzuordnen.

Die Druckschrift US 2003011260 A1 beschreibt eine Anordnung mit mehreren elektrischen Maschinen, wobei die elektrischen Maschinen mit ihren Achsen parallel angeordnet sind, wobei die Anordnung der elektrischen Maschinen einen gemeinsamen Ständer aufweist.

Ein Kompressor mit zwei Elektromaschinen ist aus der Druckschrift US 4252506 A bekannt. Dabei ist es möglich, dass zwei Elektromaschinen unmittelbar nebeneinander angeordnet werden können.

In der Druckschrift JP S59213271 A ist eine elektrische Gleichstrommaschine beschrieben. Hierbei ist vorgesehen, zwischen zwei benachbarten Elektromaschinen ein Joch für magnetische Flüsse zu verwenden.

Ein elektromotorischer Antriebsblock als Stellantrieb für ein Kraftfahrzeug mit zwei parallelen Antriebswellen ist aus der Druckschrift DE 2849869 A1 bekannt.

Ein Drehstrommotor, dessen Nennleistung auf mehrere Einzelmotoren aufgeteilt ist, ist aus der Druckschrift DE 3234673 A1 bekannt.

Aus der Druckschrift GB 289294 A ist ein kombinierter Licht- und Zündungsgenerator bekannt.

Vor diesem Hintergrund war es eine Aufgabe, mindestens eine Elektromaschine bauraumsparend auszubilden.

Diese Aufgabe wird mit einer Elektromaschine, einem System, und Verfahren mit den Merkmalen der unabhängigen Patentansprüche gelöst. Ausführungsformen der Elektromaschine, des Systems und der Verfahren gehen aus den abhängigen Patentansprüchen und der Beschreibung hervor.

Die Elektromaschine umfasst einen um eine Welle drehbaren Rotor und einen Stator, wobei der Stator ein Statorblech aufweist, dessen Außenwand an mindestens einer Stelle lokal begrenzt abgeflacht und ansonsten rund ausgebildet ist. Dabei ist vorgesehen, dass ein ursprüngliches Statorblech eine vollständig runde Außenwand aufweist, die an mindestens einer Stelle lokal begrenzt abgeflacht, bspw. geschnitten und somit geformt wird, wobei aus jeweils einem ursprünglichen Statorblech ein an der mindestens einen Stelle lokal begrenzt abgeflachtes modifiziertes Statorblech hergestellt wird. Hierbei werden Statorbleche von jeweils unmittelbar benachbart anzuordnenden Elektromaschinen über die und an den lokal begrenzt abgeflachten Stellen der Außenwände der Statorbleche miteinander verbunden, wobei die Statorbleche miteinander zumindest abschnittsweise zu einem gemeinsamen Statorblech verbunden werden. Dabei ist vorgesehen, dass ein ursprüngliches Statorblech eine vollständig runde Außenwand aufweist, die an mindestens einer Stelle lokal begrenzt abgeflacht, bspw. geschnitten und somit geformt wird, wobei aus jeweils einem ursprünglichen Statorblech ein an der mindestens einen Stelle lokal begrenzt abgeflachtes modifiziertes Statorblech hergestellt wird, wobei für jede Elektromaschine ein ursprünglich kreisrunder Kühlmittelkreislauf an einer Stelle abgeflacht wird und dabei jeweils ein abgeflachter Kühlmittelkreislauf hergestellt wird, wobei die abgeflachten Kühlmittelkreisläufe zu einem gemeinsamen Kühlmittelkreislauf vereint werden.

In der Regel ist die Außenwand des Statorblocks nur an einer derartigen Stelle lokal begrenzt abgeflacht. Es ist jedoch möglich, dass die Außenwand des Statorblocks mehrere lokal begrenzt abgeflachte Stellen umfasst.

Das erfindungsgemäße System umfasst mindestens zwei erfindungsgemäße Elektromaschinen, die nebeneinander angeordnet sind, wobei für jeweils zwei unmittelbar benachbarte Elektromaschinen lokal begrenzt abgeflachte Stellen der Außenwände der Statorbleche der jeweiligen Elektromaschinen einander bzw. gegenseitig zugewandt sind.

Weiterhin ist es möglich, dass für die jeweils zwei unmittelbar benachbarten Elektromaschinen die lokal begrenzt abgeflachten Stellen der Außenwände der Statorbleche miteinander zu einem gemeinsamen Statorblech verbunden sind.

Das System weist in möglicher Ausgestaltung nur ein Gehäuse auf, in dem die mindestens zwei Elektromaschinen gemeinsam angeordnet sind. Hierbei ist es möglich, dass die in dem gemeinsamen Gehäuse angeordneten Elektromaschinen über das gemeinsame Statorblech miteinander verbunden sind. Alternativ hierzu ist es auch möglich, dass die in dem gemeinsamen Gehäuse angeordneten Elektromaschinen voneinander getrennt sind, wobei jede Elektromaschine jeweils ein Statorblech aufweist, wobei die lokal begrenzt abgeflachten Stellen der Außenwände der Statorbleche der unmittelbar benachbarten Elektromaschinen innerhalb des gemeinsamen Gehäuses einander bzw. gegenseitig zugewandt sind.

Bei dem System weisen die Statoren von mindestens zwei unmittelbar benachbarten Elektromaschinen in Ausgestaltung ein gemeinsames Statorblech auf, das aus mehreren Statorblechen zusammengesetzt ist.

Dabei sind die Statoren über das gemeinsame Statorblech miteinander verbunden und/oder vereint. Das gemeinsame Statorblech umfasst eine für beide Statoren gemeinsame Schnittstelle bzw. einen für beide Statoren gemeinsamen Abschnitt, an dem die lokal begrenzt abgeflachten Abschnitte der Außenwände der Statorbleche verbunden sind.

Das gemeinsame Statorblech weist für jede der Elektromaschinen eine Öffnung auf. Die Statorwicklungen sowie der Rotor einer jeweiligen Elektromaschine sind innerhalb einer jeweiligen Öffnung angeordnet. Dabei umschließt jede Öffnung bzw. eine Innenwand der Öffnung die Statorwicklungen und den Rotor koaxial.

Dabei sind diese Öffnungen bspw. zueinander parallel angeordnet und je nach Definition von dem gemeinsamen Statorblech umschlossen, wobei die für die Statoren bzw. einzelnen Statorbleche vorgesehene gemeinsame Schnittstelle bzw. der gemeinsame Abschnitt der lokal begrenzt abgeflachten Statorbleche direkt zwischen Öffnungen der unmittelbar benachbarten Elektromaschinen angeordnet ist.

Weiterhin sind die Elektromaschinen in Ausgestaltung in einem gemeinsamen Gehäuse angeordnet.

Es ist möglich, dass das System mindestens einen für mindestens zwei unmittelbar benachbarte Elektromaschinen gemeinsamen Kühlkreislauf aufweist. Hierbei ist weiterhin vorgesehen, dass der mindestens eine Kühlkreislauf und/oder Kanäle für ein Kühlmittel dieses Kühlkreislaufs zumindest die Statoren der beiden unmittelbar benachbarten oder sämtlicher Elektromaschinen zumindest teilweise oder ggf. vollständig umschließt bzw. umschließen. Alternativ oder ergänzend ist es möglich, dass der Kühlkreislauf Kanäle für das Kühlmittel umfasst, die bspw. als Löcher oder Bohrungen ausgebildet und zumindest teilweise oder ggf. vollständig in dem gemeinsamen Statorblech integriert sind.

In der Regel sind die Wellen der Elektromaschinen zueinander parallel angeordnet.

Außerdem ist bei jeder Elektromaschine der Rotor innerhalb des Stators, üblicherweise innerhalb der Statorwicklungen des Stators, koaxial angeordnet.

Das System ist zum Betreiben einer Vorrichtung, u. a. eines Fahrzeugs, einsetzbar und der Vorrichtung, bspw. dem Fahrzeug, zuordenbar, d. h. in und/oder an dem Fahrzeug anordenbar. Hierbei ist vorgesehen, dass das System in der Regel zwei Elektromaschinen, die in Ausgestaltung über ihre Statorbleche miteinander verbunden sind, aufweist.

Bei dem Verfahren zum Herstellen einer Elektromaschine, die einen um eine Welle drehbaren Rotor und einen Stator umfasst, wird für den Stator ein Statorblech bereitgestellt, dessen Außenwand an mindestens einer Stelle lokal begrenzt abgeflacht und ansonsten rund ausgebildet wird.

Bei dem erfindungsgemäßen Verfahren zum Herstellen eines Systems wird dieses System aus mindestens zwei Elektromaschinen hergestellt, wobei jede Elektromaschine durch eine Ausführungsform des voranstehend beschriebenen Verfahrens hergestellt wird.

Das Verfahren ist zum Herstellen eines Systems aus mindestens zwei Elektromaschinen vorgesehen, wobei jede Elektromaschine einen um eine Welle drehbaren Rotor und einen Stator umfasst, wobei die Statoren von zwei unmittelbar benachbarten Elektromaschinen aus einem gemeinsamen Statorblech hergestellt werden.

In Ausgestaltung werden einzelne, bspw. ursprüngliche Statorbleche der unmittelbar benachbarten bzw. unmittelbar benachbart anzuordnenden Elektromaschinen miteinander zumindest abschnittsweise zu dem gemeinsamen Statorblech verbunden und miteinander vereint. Hierbei wird jeweils ein einzelnes ursprüngliches Statorblech einer Elektromaschine bspw. aus einem beschnittenen und/oder abschnittsweise, d. h. an seiner Außenwand an mindestens einer Stelle lokal begrenzt abgeflachten Blechpaket hergestellt.

Das gemeinsame Statorblech wird in Ausgestaltung in einem für die Elektromaschinen gemeinsamen Gehäuse angeordnet. Hierbei ist es möglich, dass die Statorwicklungen und ein Rotor in einer jeweiligen Öffnung des gemeinsamen Statorblechs angeordnet werden, bevor das gemeinsame Statorblech in dem gemeinsamen Gehäuse angeordnet wird oder danach.

Es ist auch möglich, dass das gemeinsame Statorblech für die unmittelbar benachbarten Elektromaschinen geformt wird. Dies umfasst auch die Maßnahme, dass das gemeinsame Statorblech aus einem ursprünglichen Statorblech hergestellt wird, das die Öffnungen für die Statorwicklungen und die Rotoren der Elektromaschinen umfasst.

Das vorgestellte System umfasst in der Regel zwei Elektromaschinen. Durch die Maßnahme, dass diese beiden Elektromaschinen ein gemeinsames Statorblech aufweisen, ist es möglich, deren Wellen und/oder Rotoren zueinander parallel anzuordnen, wobei ein Stichmaß der beiden Wellen reduziert wird.

Zum Herstellen des Systems ist es u. a. möglich, dass das gemeinsame Statorblech durch Verbinden zweier ursprünglicher Statorbleche gebildet wird, wobei jeweils ein derartiges Statorblech einer Elektromaschine als beschnittenes, an mindestens einer Stelle seiner Außenwandung lokal begrenzt abgeflachtes Blechpaket ausgebildet ist. Weiterhin ist vorgesehen, dass die Elektromaschinen nicht nur ein gemeinsames Statorblech sondern auch ein gemeinsames Gehäuse bzw. ein Einheitsgehäuse aufweisen, in dem die Elektromaschinen angeordnet sind.

Das vorgestellte System ist bspw. für ein als Kraftfahrzeug ausgebildetes Fahrzeug geeignet. Dabei ist das System bspw. in einem Hinterwagen des Fahrzeugs anordenbar. Die in der Regel zueinander parallel angeordneten Statoren, Rotoren sowie Wellen der Elektromaschinen sind in dem Fahrzeug bspw. parallel zu einer Vorwärtsfahrtrichtung des Fahrzeugs oder senkrecht zu dieser Vorwärtsfahrtrichtung angeordnet.

Durch Vorsehen des gemeinsamen Statorblechs bzw. eines entsprechenden gemeinsamen Statorblechpakets ist es möglich, das Stichmaß der Wellen der Elektromaschinen zu reduzieren. Dabei ist es weiterhin möglich, dass das gemeinsame Statorblech eine für die Elektromaschinen gemeinsam kombinierte Kühlung und/oder den Kühlkreislauf für die Flüssigkeit umfasst.

Ein zum Betrieb der Elektromaschinen erforderlicher magnetischer Fluss wird hierbei über eine geeignete Drehrichtung der Rotoren der Elektromaschinen bei einer Standardfahrt des Fahrzeugs optimiert. Insgesamt ist es möglich, die Rotorwellen der Elektromaschinen innerhalb des Systems dichter zusammenzurücken. Durch die Maßnahme, das gemeinsame Statorblech aus bspw. beschnittenen Blechpaketen herzustellen, ist das Stichmaß der Wellen der Elektromaschinen ebenfalls reduzierbar.

Falls das System zwei Elektromaschinen aufweist, ist es möglich, dass das gemeinsame Statorblech und/oder das gemeinsame Gehäuse bspw. eine Brillenform aufweist bzw. aufweisen. Somit ist auch eine Wandstärke des Gehäuses reduzierbar, wodurch für die Elektromaschinen hinsichtlich einer Leistung sowie eines Moments ein größerer Bauraum bereitstellbar ist.

Das vorgestellte System sowie das vorgestellte Verfahren vereinen üblicherweise zwei Elektromaschinen in dem gemeinsamen Statorblech. Dabei sind die beiden Öffnungen, die das gemeinsame Statorblech für die beiden Elektromaschinen umschließt, nebeneinander sowie zueinander parallel angeordnet. Es ist jedoch auch denkbar, dass das System für eine größere Anzahl als lediglich zwei Elektromaschinen realisierbar ist. Falls das System drei Elektromaschinen aufweist, weisen diese ebenfalls ein gemeinsames Statorblech auf, das die drei Öffnungen für die drei Elektromaschinen umschließt, wobei die Mittelpunkte der Öffnungen, durch die Wellen der Elektromaschinen verlaufen, bspw. an Eckpunkten eines gleichseitigen Dreiecks angeordnet sind. Falls das System bspw. vier Elektromaschinen aufweisen sollte, umschließt das gemeinsame Statorblech vier Öffnungen, deren Mittelpunkte wie Eckpunkte eines Quadrats relativ zueinander angeordnet sind. Hierbei weist jedes Statorblech einer Elektromaschine an seiner Außenwand mehrere lokal begrenzt abgeflachte Stellen auf, wobei jeweils zwei derartige abgeflachte Stellen von zwei unmittelbar benachbarten Elektromaschinen einander zugewandt und miteinander verbunden sind.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt in schematischer Darstellung Ausführungsformen der Elektromaschinen und eine Ausführungsform des erfindungsgemäßen Systems, die jeweils durch Ausführungsformen der erfindungsgemäßen Verfahren hergestellt sind.
Figur 2 zeigt die Ausführungsform des erfindungsgemäßen Systems in schematischer Darstellung.

Die Figuren werden zusammenhängend und übergreifend beschrieben, gleichen Komponenten sind dieselben Bezugsziffern zugeordnet.

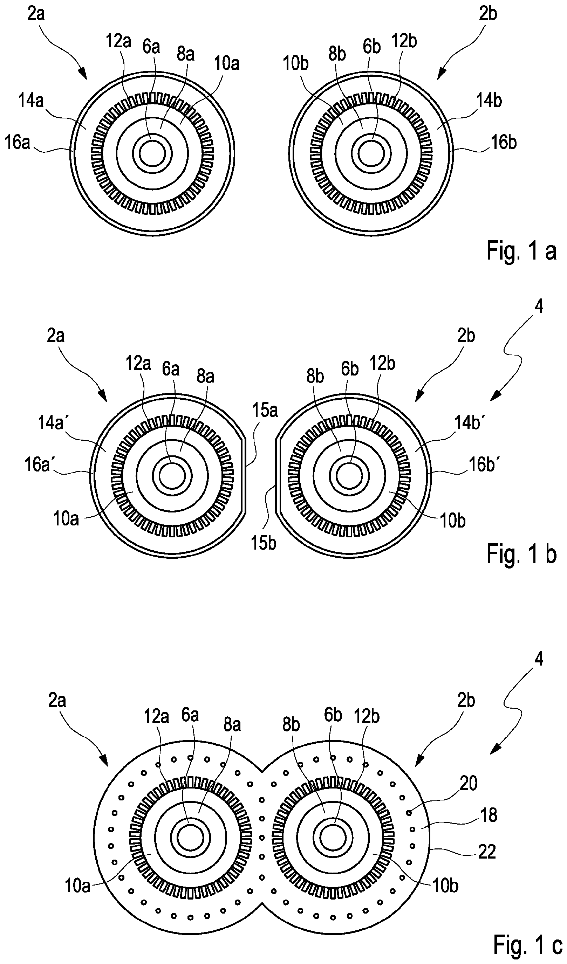

Anhand der Figuren 1a, 1b und 1c sind Schritte schematisch verdeutlicht, durch die bei Durchführung einer Ausführungsform eines erfindungsgemäßen Verfahrens zunächst aus zwei ursprünglichen Elektromaschinen 2a, 2b als Edukte (Figur 1a) Ausführungsformen der Elektromaschinen 2a, 2b (Figur 1b) als Produkte hergestellt werden. Die Ausführungsform des erfindungsgemäßen Systems 4 als weiteres Produkt (Figur 1c) wird durch ein weiteres erfindungsgemäßes Verfahren aus den beiden Elektromaschinen 2a, 2b hergestellt.

Dabei umfasst jede der beiden ursprünglichen Elektromaschinen 2a, 2b von innen nach außen eine zentrale Welle 6a, 6b, die von einem Rotorblech 8a, 8b koaxial umschlossen ist. Dieses ist wiederum von Rotornuten 10a, 10b koaxial umschlossen. Ein Stator einer jeweiligen ursprünglichen Elektromaschine 2a, 2b umfasst Wickelnuten bzw. Statorwicklungen 12a, 12b, die das Rotorblech 8a, 8b sowie die Rotornuten 10a, 10b koaxial umschließen. Dabei sind die Wickelnuten 12a, 12b jeweils von einem ursprünglichen Statorblech 14a, 14b umschlossen, das wiederum von einem ursprünglichen Kühlkreislauf 16a, 16b umschlossen ist.

Figur 1b zeigt, wie die beiden ursprünglichen Elektromaschinen 2a, 2b ausgehend von dem in Figur 1a gezeigten Zustand bei der Ausführungsform des Verfahrens modifiziert werden. Hierbei wird bei jeder Elektromaschine 2a, 2b das ursprünglich kreisrunde Statorblech 14a, 14b an jeweils einer Stelle 15a, 15b abgeflacht und somit ein lokal begrenzt abgeflachtes Statorblech 14a', 14b' für die jeweilige Elektromaschine 2a, 2b gebildet. Es ist weiterhin vorgesehen, dass für jede Elektromaschine 2a, 2b der ursprüngliche kreisrunde Kühlmittelkreislauf 16a, 16b an einer Stelle abgeflacht wird und dabei jeweils ein abgeflachter Kühlmittelkreislauf 16a', 16b' hergestellt wird. Weiterhin ist zur Herstellung der hier gezeigten Ausführungsform des erfindungsgemäßen Systems 4 vorgesehen, dass die abgeflachten Stellen 15a, 15b der Elektromaschinen 2a, 2b einander zugewandt und dicht nebeneinander angeordnet werden.

In einem weiteren Schritt des Verfahrens ist vorgesehen, dass die abgeflachten Statorbleche 14a', 14b' hier an den beiden und/oder entlang der beiden Abschnitte 15a, 15b durch Schweißen oder Löten als mögliches thermisches Fügeverfahren miteinander verbunden und/oder vereint werden, wobei für beide Elektromaschinen 2a, 2b ein gemeinsames Statorblech 18 gebildet wird. Außerdem werden die abgeflachten Kühlmittelkreisläufe 16a', 16b' zu einem gemeinsamen Kühlmittelkreislauf 20 vereint. Ergänzend werden die über das gemeinsame Statorblech 18 sowie den gemeinsamen Kühlmittelkreislauf 20 nunmehr miteinander vereinten Elektromaschinen 2a, 2b innerhalb eines gemeinsamen Gehäuses 22 angeordnet. Dabei umfasst das gemeinsame Statorblech 18 Löcher für Kanäle des gemeinsamen Kühlmittelkreislaufs 20.

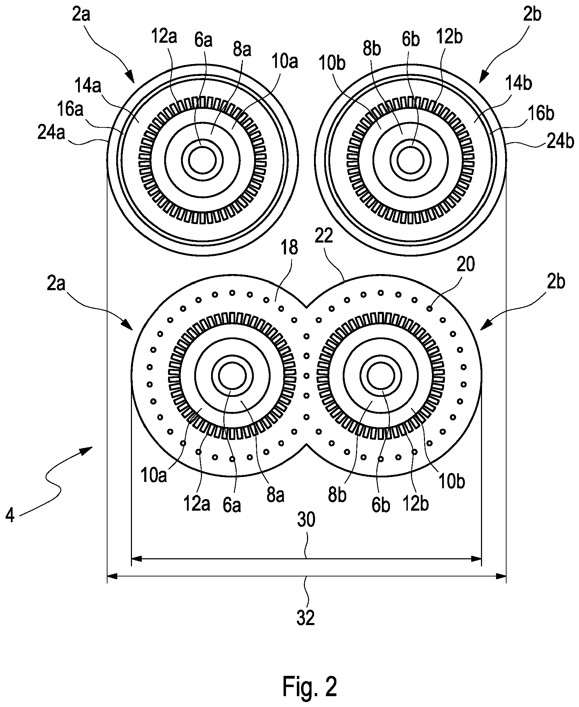

Figur 2 zeigt die beiden noch voneinander getrennten ursprünglichen Elektromaschinen 2a, 2b, wie sie auch in Figur 1a schematisch dargestellt sind, wobei für jede Elektromaschine 2a, 2b hier auch noch ein Gehäuse 24a, 24b gezeigt ist, das den Kühlmittelkreislauf 16a, 16b der jeweiligen Elektromaschine 2a, 2b koaxial umschließt. Zum Vergleich hierzu zeigt Figur 2 auch die bereits in Figur 1c dargestellte Ausführungsform des erfindungsgemäßen Systems 4, wobei aus Figur 2 hervorgeht, dass die innerhalb des Systems 4 über das gemeinsame Statorblech 18 vereinten Elektromaschinen 2a, 2b ein geringeres Stichmaß (erster Doppelpfeil 30) als die beiden voneinander unabhängigen Elektromaschinen 2a, 2b (zweiter Doppelpfeil 32) aufweisen.

## Patentansprüche

1. System, das mindestens zwei Elektromaschinen (2a, 2b) aufweist, wobei jede Elektromaschine (2a, 2b) einen um eine Welle (6a, 6b) drehbaren Rotor und einen Stator umfasst, wobei der Stator ein ursprüngliches Statorblech (14a, 14b) aufweist, dessen Außenwand an mindestens einer Stelle (15a, 15b) lokal begrenzt abgeflacht und ansonsten rund ausgebildet ist, wobei die Elektromaschinen (2a, 2b) nebeneinander angeordnet sind, wobei für jeweils zwei unmittelbar benachbarte Elektromaschinen (2a, 2b) lokal begrenzt abgeflachte Stellen (15a, 15b) der Außenwände der Statorbleche (14a, 14b) der jeweiligen Elektromaschinen (2a, 2b) einander zugewandt sind, wobei für die jeweils zwei unmittelbar benachbarten Elektromaschinen (2a, 2b) die lokal begrenzt abgeflachten Stellen (15a, 15b) der Außenwände der Statorbleche (14a, 14b) der Statoren zumindest abschnittsweise miteinander zu einem gemeinsamen Statorblech (18) verbunden sind,
**dadurch gekennzeichnet,**
**dass** jeweils ein ursprüngliches Statorblech (14a, 14b) eine vollständig runde Außenwand aufweist, die an mindestens einer Stelle (15a, 15b) lokal begrenzt abgeflacht wird, wobei für jede Elektromaschine (2a, 2b) ein ursprünglich kreisrunder Kühlmittelkreislauf (16a, 16b), welcher jeweiligen Elektromaschine 2a, 2b koaxial umschließt, an einer Stelle abgeflacht wird und dabei jeweils ein abgeflachter Kühlmittelkreislauf (16a', 16b') hergestellt wird, wobei die abgeflachten Kühlmittelkreisläufe (16a', 16b') zu einem gemeinsamen Kühlmittelkreislauf (20) vereint werden.

2. System nach Anspruch 1, das ein Gehäuse (22) aufweist, in dem die mindestens zwei Elektromaschinen (2a, 2b) gemeinsam angeordnet sind.

3. System nach einem der Ansprüche 1 oder 2, das für die mindestens zwei Elektromaschinen (2a, 2b) einen gemeinsamen Kühlkreislauf aufweist.

4. System nach einem der Ansprüche 1 bis 3, das zum Betreiben eines Fahrzeugs einsetzbar und dem Fahrzeug zuordenbar ist.

5. Verfahren zum Herstellen eines Systems (4) aus mindestens zwei Elektromaschinen (2a, 2b), wobei jede Elektromaschine (2a, 2b) einen um eine Welle (6a, 6b) drehbaren Rotor und einen Stator umfasst, wobei für den Stator ein ursprüngliches Statorblech (14a, 14b) bereitgestellt wird, dessen Außenwand an mindestens einer Stelle (15a, 15b) lokal begrenzt abgeflacht und ansonsten rund ausgebildet wird, wobei Statorbleche (14a, 14b) von jeweils unmittelbar benachbart anzuordnenden Elektromaschinen (2a, 2b) an den lokal begrenzt abgeflachten Stellen (15a, 15b) der Außenwände der Statorbleche (14a, 14b) der Statoren zumindest abschnittsweise miteinander zu einem gemeinsamen Statorblech (18) verbunden werden,
**dadurch gekennzeichnet,**
**dass** jeweils ein ursprüngliches Statorblech (14a, 14b) eine vollständig runde Außenwand aufweist, die an mindestens einer Stelle (15a, 15b) lokal begrenzt abgeflacht wird, wobei für jede Elektromaschine (2a, 2b) ein ursprünglich kreisrunder Kühlmittelkreislauf (16a, 16b), welcher jeweiligen Elektromaschine 2a, 2b koaxial umschließt, an einer Stelle abgeflacht wird und dabei jeweils ein abgeflachter Kühlmittelkreislauf (16a', 16b') hergestellt wird, wobei die abgeflachten Kühlmittelkreisläufe (16a', 16b') zu einem gemeinsamen Kühlmittelkreislauf (20) vereint werden.

6. Verfahren nach Anspruch 5, bei dem die Elektromaschinen (2a, 2b) in einem gemeinsamen Gehäuse (22) angeordnet werden.

7. Verfahren nach einem der Ansprüche 5 oder 6, bei dem das gemeinsame Statorblech (18) für die unmittelbar benachbarten Elektromaschinen (2a, 2b) geformt wird.

## Claims

1. System which has at least two electric machines (2a, 2b), wherein each electric machine (2a, 2b) comprises a rotor rotatable about a shaft (6a, 6b) and a stator, wherein the stator has an original stator plate (14a, 14b), the outer wall of which is locally limited and flattened in at least one location (15a, 15b) and otherwise is designed to be round, wherein the electric machines (2a, 2b) are arranged next to one another, wherein for each two directly adjacent electric machines (2a, 2b) locally limited and flattened locations (15a, 15b) of the outer walls of the stator plates (14a, 14b) of the respective electric machines (2a, 2b) face one another, wherein for the two directly adjacent electric machines (2a, 2b) the located limited and flattened locations (15a, 15b) of the outer walls of the stator plates (14a, 14b) of the stators are connected to one another at least partly to form a common stator metal plate (18),
**characterised in that**
an original stator plate (14a, 14b) has a completely round outer wall, which is flattened and locally limited in at least one location (15a, 15b), wherein for each electric machine (2a, 2b) an originally round coolant circuit (16a, 16b), which coaxially encloses the respective electric machine (2a, 2b), is flattened in one location, and thereby a flattened coolant circuit (16a', 16b') is produced, wherein the flattened coolant circuits (16a', 16b') are unified into a common coolant circuit (20).

2. System according to claim 1, which has a housing (22) in which the at least two electric machines (2a, 2b) are arranged together.

3. System according to any of claims 1 or 2, which has a common cooling circuit for the at least two electric machines (2a, 2b).

4. System according to any of claims 1 to 3, which can be employed for operating a vehicle and assigned to the vehicle.

5. Method for producing a system (4) comprising at least two electric machines (2a, 2b), wherein each electric machine (2a, 2b) comprises a rotor rotatable about a shaft (6a, 6b) and a stator, wherein the stator has an original stator plate (14a, 14b), the outer wall of which is locally limited and flattened in at least one location (15a, 15b), and which is otherwise designed to be round, wherein stator plates (14a, 14b) are connected to one another at least partly to form a common stator plate (18) by electric machines (2a, 2b) to be arranged directly adjacent to one another on the locally limited and flattened locations (15a, 15b) of the outer walls of the stator plates (14a, 14b) of the stators,
**characterised in that**,
an original stator plate (14a, 14b) has a completely round outer wall, which is locally limited and flattened in at least one location (15a, 15b), wherein for each electric machine (2a, 2b) an originally round coolant circuit (16a, 16b), which coaxially encloses the respective electric machine (2a, 2b), is flattened in one location, and thereby a flattened coolant circuit (16a', 16b') is produced, wherein the flattened coolant circuits (16a', 16b') are unified into a common coolant circuit (20).

6. Method according to claim 5, wherein the electric machines (2a, 2b) are arranged in a common housing (22).

7. Method according to any of claims 5 or 6, wherein the common stator plate (18) is formed for the directly adjacent electric machines (2a, 2b).

## Revendications

1. Système qui présente au moins deux machines électriques (2a, 2b), dans lequel chaque machine électrique (2a, 2b) comprend un rotor pouvant tourner autour d'un arbre (6a, 6b) et un stator, dans lequel le stator présente une tôle de stator d'origine (14a, 14b), dont la paroi extérieure est aplatie localement de manière limitée en au moins un point (15a, 15b) et est sinon réalisée de manière ronde, dans lequel les machines électriques (2a, 2b) sont disposées côte à côte, dans lequel les points aplatis localement (15a, 15b) des parois extérieures des tôles de stator (14a, 14b) des machines électriques respectives (2a, 2b) sont tournés l'un vers l'autre respectivement pour deux machines électriques directement voisines (2a, 2b), dans lequel, respectivement pour les deux machines électriques directement voisines (2a, 2b), les points aplatis localement de manière limitée (15a, 15b) des parois extérieures des tôles de stator (14a, 14b) des stators sont connectés les uns aux autres au moins par sections pour former une tôle de stator commune (18),
**caractérisé en ce que**
respectivement une plaque de stator d'origine (14a, 14b) présente une paroi extérieure entièrement ronde, qui est aplatie localement de manière limitée en au moins un point (15a, 15b), dans lequel un circuit de liquide de refroidissement circulaire d'origine (16a, 16b), lequel entoure coaxialement la machine électrique respective (2a, 2b), est aplati en un point et un circuit de liquide de refroidissement (16a', 16b') est ainsi respectivement produit pour chaque machine électrique (2a, 2b), dans lequel les circuits de liquide de refroidissement aplatis (16a', 16b') sont réunis pour former un circuit de liquide de refroidissement commun (20).

2. Système selon la revendication 1, qui présente un boîtier (22) dans lequel les au moins deux machines électriques (2a, 2b) sont disposées ensemble.

3. Système selon l'une quelconque des revendications 1 ou 2, qui présente un circuit de refroidissement commun pour les au moins deux machines électriques (2a, 2b).

4. Système selon l'une des revendications 1 à 3, qui peut être utilisé pour faire fonctionner un véhicule et peut être affecté au véhicule.

5. Procédé de fabrication d'un système (4) composé d'au moins deux machines électriques (2a, 2b), dans lequel chaque machine électrique (2a, 2b) comprend un rotor pouvant tourner autour d'un arbre (6a, 6b) et un stator, dans lequel une tôle de stator d'origine (14a, 14b) est prévue pour le stator, dont la paroi extérieure est aplatie localement de manière limitée en au moins un point (15a, 15b) et est sinon réalisée de manière ronde, dans lequel des tôles de stator (14a, 14b) de machines électriques (2a, 2b) à disposer respectivement de manière directement voisine sont connectées entre elles, au moins par sections, aux points localement aplatis (15a, 15b) des parois extérieures des tôles de stator (14a, 14b) des stators pour former une tôle de stator commune (18),
**caractérisé en ce**
**que** respectivement une plaque de stator d'origine (14a, 14b) présente une paroi extérieure entièrement ronde, qui est aplatie localement de manière limitée en au moins un point (15a, 15b), dans lequel un circuit de liquide de refroidissement circulaire d'origine (16a, 16b), lequel entoure coaxialement la machine électrique respective (2a, 2b), est aplati en un point et un circuit de liquide de refroidissement (16a', 16b') est ainsi respectivement produit pour chaque machine électrique (2a, 2b), dans lequel les circuits de liquide de refroidissement aplatis (16a', 16b') sont réunis pour former un circuit de liquide de refroidissement commun (20).

6. Procédé selon la revendication 5, dans lequel les machines électriques (2a, 2b) sont disposées dans un boîtier commun (22).

7. Procédé selon l'une quelconque des revendications 5 ou 6, dans lequel la tôle de stator commune (18) est formée pour les machines électriques immédiatement voisines (2a, 2b).
